# EUROPÄISCHE PATENTSCHRIFT

(11) **EP 1 687 375 B1**
(45) Veröffentlichungstag und Bekanntmachung des Hinweises auf die Patenterteilung: **07.10.2009**
(21) Anmeldenummer: 04797883.8
(22) Anmeldetag: 13.11.2004
(51) Int. Cl.: C08L 67/02, C08L 69/00, C08K 5/3462, C08K 3/00

(54) **HOMOGEN DURCHGEFÄRBTE, BEWITTERUNGSSTABILE ZUSAMMENSETZUNGEN AUF BASIS SCHLAZÄHMODIFIZIERTER POLYAKYLENTEREPHTHALAT/POLYCARBONAT BLENDS**
WEATHER-RESISTANT COMPOSITIONS BASED ON POLYALKYLENE TEREPHTHALATE/POLYCARBONATE BLENDS WITH MODIFIED IMPACT RESISTANCE AND MOULDED-IN COLOUR
COMPOSITIONS TEINTEES DE MANIERE HOMOGENE, RESISTANTES AUX INTEMPERIES, A BASE DE MELANGES POLYALKYLENE TEREPHTALATE/POLYCARBONATE A RESILIENCE MODIFIEE

(30) Priorität: 18.11.2003 DE 10353830; 05.05.2004 DE 102004022108
(43) Veröffentlichungstag der Anmeldung: 09.08.2006
(73) Patentinhaber: Bayer MaterialScience AG, 51368 Leverkusen (DE)
(72) Erfinder: PERSIGEHL, Peter, Wuxi, Jiangsu 214121 (CN); PAUL, Friedemann, 51469 Bergisch Gladbach (DE); DORSCH, Urs-Peter, 41540 Dormagen (DE); THIEM, Hans-Jürgen, 41539 Dormagen (DE)
(86) Internationale Anmeldenummer: PCT/EP2004/012901
(87) Internationale Veröffentlichungsnummer: WO 2005/049729

(56) Entgegenhaltungen:
- EP-A- 0 787 769
- US-A- 5 461 092

## Beschreibung

Die vorliegende Erfindung betrifft eingefärbte, bewitterungsstabilisierte Zusammensetzungen auf Basis schlagzähmodifizierter Polyalkylenterephthalt/Polycarbonat-Blends und daraus hergestellte Formmassen, Halbzeuge und Formteile, die unlackiert oder nur mit einem transparenten Klarlack beschichtet beispielsweise für Kfz-Außenanwendungen eingesetzt werden.

Schlagzähmodifzierte Formmassen, die teilkristalline Polyester, amorphe Polycarbonate und Pfropfcopolymerisate enthalten, sind bekannt. Derartige Formmassen werden beispielsweise im Automobilsektor für Formteile wie Stoßfänger, Kotflügel, Kühlergitter, Blenden, Heckblenden, Schweller, Spoiler, Türgriffe, Tankdeckel, Verkleidungen, horizontale Bauteile wie Motorhauben oder Dachelemente, Türmodule oder ähnlichem eingesetzt. Voraussetzungen für den Einsatz in Kfz-Anwendungen sind hohe Wärmeformbeständigkeit, hohe Fließfähigkeit in der Schmelze, gute Lackhaftung, hohe Chemikalienbeständigkeit, hohe Steifigkeit, hohe Dimensionsstabilität und hohe Tieftemperaturzähigkeit.

Die Farbgebung der Formteile aus schlagzähmodifizierten Polyalkylenterephthalat/-Polycarbonat-Blends kann nach zwei verschiedenen Methoden erfolgen. Traditionell werden die Formteile mit einem farbgebenden Lack, dem sogenannten Basislack, lackiert. Vor dem Basislack können die Formteile optional außerdem mit Primer und/oder Filler beschichtet worden sein. Auf den Basislack kann außerdem optional ein transparenter Klarlack aufgebracht werden. Diese Systeme werden im folgenden decklackierten Systeme genannt. Bei den decklackierten Systemen ist die Eigenfarbe der Formmassen im wesentlichen unerheblich, da die Farbgebung durch den Basislack erfolgt.

Alternativ zu den decklackierten Systemen gibt es Systeme, die im folgenden durchgefärbte Systeme ("molded-in color") genannt werden. Bei durchgefärbten Systemen wird die Farbe des Formteils in der Anwendung durch die Eigenfarbe der Formmasse bestimmt, das heißt durchgefärbte Systeme werden nicht mit einem Primer, Filler oder farbgebendem Basislack lackiert. Optional können die durchgefärbten Systeme jedoch mit transparentem Klarlack beschichtet sein. Der Vorteil bei durchgefärbten Systemen liegt in der Kostenersparnis, da die Arbeitsschritte des Grundierens mit Primer und/oder Fillers sowie des Lackierens mit farbgebenden Basislacken und der dazugehörigen Trocknungen entfallen.

Der Einsatz der Formteile aus schlagzähmodifizierten Polyalkylenterephthalad-Polycarbonat-Blends im KFZ-Außenbereich bringt hohe Anforderungen an die Witterungsbeständigkeit des Materials der Formteile mit sich. Hierbei sind die Beständigkeit gegen Photooxidation durch UV-Bestrahlung (im folgenden als UV-Stabilität bezeichnet) und die Beständigkeit der Materialien gegen hydrolysierend wirkende Umwelteinflüsse (im folgenden als Hydrolysestabilität bezeichnet) von zentraler Bedeutung.

Bei decklackierten Systemen werden die schädlichen UV-Strahlen weitestgehend durch den Basislack zurückgehalten. Bei durchgefärbten Systemen ist dagegen keine UV-Blockfunktion eines abdeckenden Basislacks gegeben. Bestenfalls kann ein UV-absorbierender Klarlack bei durchgefärbten Systemen den Großteil der schädlichen UV-Strahlung abhalten. Dennoch müssen Formmassen, die durchgefärbten Systemen zugrunde liegen, eine hohe UV-Stabilität aufweisen, weshalb Schlagzähmodifikatoren auf Basis von Kautschuken mit konjugierten Dienen, wie beispielsweise Butadien in ABS- oder MBS-Kautschuken, alleine nicht eingesetzt werden können.

Witterungsstabile PC/Polyester-Blends setzten daher beispielweise Acrylatkautschuke ein, wie in DE-A 33 02 124 beschrieben wurde.

EP-B 0 787 769 beschreibt den Einsatz von PC/Polyesterblends mit einer Kombination von AES- und Acrylatkautschuken um Formmassen mit verbesserter Witterungsstabilität und guter Zähigkeit zu erhalten.

Die Hydrolyse-Stabilität der schlagzähmodifizierten Polyalkylenterephthalat/-Polycarbonat-Blends ist insbesondere gefordert, wenn die Formteile aus diesen Materialien während der Lebensdauer des KFZ unter Bedingungen mit hoher Außentemperatur und hoher Luftfeuchtigkeit eingesetzt werden.

US-A 5 354 791 beschreibt die Verwendung von Epoxy-substituierten Polyalkylenterephthalat-Formmassen in Kombination mit metallhaltigen Phosphor-Verbindungen in schlagzähmodifizierten Polyalkylen-terephthalat/-Polycarbonat-Blends zur Verbesserung der Hydrolyse-Stabilität. Die Verbesserung der Hydrolyse-Stabilität wird hier durch die geringe Veränderung der Schmelzviskosität nach Lagerung des Materials bei 110°C in Wasser im Autoklaven beschrieben. Die UV-Beständigkeit und die Oberflächenbeschaffenheit sind nicht Inhalt von US-A 5 354 791.

Bei durchgefärbten Systemen ist neben der Witterungsstabilität jedoch auch die homogene Einfärbbarkeit von sehr großer Bedeutung. Gerade bei schlagzähmodifizierten PC/Polyesterblends mit witterungsbeständigen Acrylat-Schlagzähmodifikatoren treten bei Spritzgussformteilen unerwünschte Farbinhomogenitäten auf, bei denen sich senkrecht zur Fließrichtung während des Spritzgussvorgangs periodisch wiederkehrende weniger eingefärbte Bereiche, die optisch heller wirken, mit tiefer eingefärbten Bereichen, die optisch dunkler oder farbintensiver wirken, ausbilden, die auch als Tigerstreifen bezeichnet werden. Für Formteile, die in der Endanwendung wie beispielsweise Kfz-Außenhaut - wie z.B. Kotflügel, Stoßfänger, Heckklappe, Blende, Spoiler, Lufteinlassgitter, Motorhaube, Autodach-, Kfz-Innenraum, Elektrogehäuse, Elektronikgehäuse, die vom Anwender optisch wahrgenommen werden, sind diese Tigerstreifeneffekte nicht annehmbar.

Aufgabe war die Entwicklung von homogen eingefärbten schlagzähmodifizierten Polyalkylenterephthalat/Polycarbonat-Formmassen mit verbesserter Bewitterungs-Beständigkeit für Anwendungen in sogenannten durchgefärbten Systemen ("molded in color"). Bei durchgefärbten Systemen werden erhöhte Anforderungen an die homogene Einfärbung der Formmassen bzw. der Formteile gestellt, da die Formmasseneinfärbung gleichzeitig für die Farberscheinung des fertigen Formteils in der Anwendung verantwortlich ist.

Überraschend wurde nun gefunden, dass Formmassen auf Basis von Polyalkylenterephthalat/Polycarbonat die gestellte Aufgabe erfüllen, wenn als Schlagzähmodifikator mindestens zwei verschiedene Systeme basierend auf Pfropfcopolymerzusammensetzungen auf Basis von Acrylaten einerseits und auf Basis von Butadien andererseits in Kombination mit Stabilisatoren zur Erhöhung der UV-Beständigkeit und zur Verbesserung der Hydrolysebeständigkeit eingesetzt werden. Die Formteile aus den erfindungsgemäßen Formmassen zeichnen sich durch homogenes Erscheinungsbild und homogenen Farbeindruck der Oberfläche und ausgezeichnete Bewitterungsstabilität aus. Darüber hinaus zeichnen sich die erfindungsgemäßen. Formmassen durch hohe Wärmeformbeständigkeit, gute Fließfähigkeit in der Schmelze, gute Lackhaftung, hohe Chemikalienbeständigkeit, hohe Steifigkeit, hohe Dimensionsstabilität und hohe Tieftemperaturzähigkeit aus.

Gegenstand der Erfindung sind Zusammensetzungen, enthaltend
A) 4 bis 80 Gew.-Teile, vorzugsweise 10 bis 60 Gew.-Teile, besonders bevorzugt 12 bis 50 Gew.-Teile, insbesondere 19 bis 40 Gew.-Teile, mindestens eines Polyalkylenterephthalats, bevorzugt eines Polyethylenterephthalats oder eine Polybutylenterephthalats, besonders bevorzugt eines Polybutylenterephthalats,
B) 10 bis 90 Gew.-Teile, vorzugsweise 20 bis 80 Gew.-Teile, besonders bevorzugt 25 bis 60 Gew.-Teile, insbesondere 30 bis 60 Gew.-Teile, mindestens eines aromatischen Polycarbonats,
C) 1,5 bis 30 Gew.-Teile, vorzugsweise 3 bis 25 Gew.-Teile, besonders bevorzugt 4 bis 20 Gew.-Teile, insbesondere 5 bis 15 Gew.-Teile, mindestens eines Pfropfpolymerisats auf Basis von kautschukelastischen olefinisch ungesättigten Olefin(co-)polymerisaten, bevorzugt Polybutadien als Kautschukkomponente,
D) 1,5 bis 30 Gew.-Teile, vorzugsweise 3 bis 25 Gew.-Teile, besonders bevorzugt 4 bis 20 Gew.-Teile, insbesondere 5 bis 15 Gew.-Teile, mindestens eines Pfropfpolymerisats auf Basis von Acrylaten als Kautschukkomponente,
E) 0,01 bis 5 Gew.-Teile, vorzugsweise 0,05 bis 3 Gew.-Teile, besonders bevorzugt 0,1 bis 1 Gew.-Teile eines UV-Stabilisatoren,
F) 0,01 bis 10 Gew.-Teile, bevorzugt 0,05 bis 6 Gew.-Teile, besonders bevorzugt 0,1 bis 3 Gew.-Teile Farbmittel,
G) 0 bis 5 Gew.-Teile, vorzugsweise 0,05 bis 3 Gew.-Teile, besonders bevorzugt 0,1 bis -2 Gew.-Teile Hydrolysestabilisatoren, bevorzugt auf Basis Epoxyverbindungen,
H) 0 bis 54 Gew.-Teile, vorzugsweise 3 bis 34 Gew.-Teile, besonders bevorzugt 6 bis 25, insbesondere 8 bis 21 Gew.-Teile, mindestens eines teilchenförmigen mineralischen Füllstoffs,
I) 0 bis 10 Gew.-Teile, bevorzugt 0,05 bis 3 Gew.-Teile, besonders bevorzugt 0,1 bis 0,9 Gew.-Teile weiterer Additive.

Als Komponente A enthalten die Zusammensetzungen erfindungsgemäß ein oder eine Mischung aus zwei oder mehr unterschiedlichen Polyalkylenterephthalaten. Polyalkylenterephthalate im Sinne der Erfindung sind Polyalkylenterephthalate, die sich von Terephthalsäure (oder ihren reaktionsfähigen Derivaten) und Alkandiolen beispielsweise auf Basis von Ethylenglykol, Propylenglycol oder Butandiol ableiten. Erfindungsgemäß werden als Komponente A bevorzugt Polybutylenterephthalat, Polytrimethylenterephthalat und/oder Polyethylenterephthalat, besonders bevorzugt Polybutylenterephthalat und/oder Polyethylenterephthalat, am meisten bevorzugt Polybutylenterephthalat eingesetzt.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff., Karl-Hanser-Verlag, München 1973).

Bevorzugte Polyalkylenterephthalate enthalten mindestens 80 Mol-%, vorzugsweise 90 Mol-%, bezogen auf die Dicarbonsäure, Terephthalsäurereste und mindestens 80 Mol%, vorzugsweise mindestens 90 Mol-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bemsteinsteinsäure, Adipinsäure, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3-glykolresten bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-D1-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan.

Die Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähige Derivate (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5, vorzugsweise 0,5 bis 1,3, jeweils gemessen in Phenol/o-Dichlorbenzol (1:1 Gew.-Teile) bei 25°C.

Bevorzugt können die erfindungsgemäß einzusetzenden Polyalkylenterephthalate auch im Gemisch mit anderen Polyestern und/oder, weiteren Polymeren eingesetzt werden. Besonders bevorzugt werden Gemische von Polyalkylenterephthalaten mit anderen Polyestern, ganz besonders bevorzugt Gemische von Polybutylenterephthalat mit Polyethylenterephthalat eingesetzt.

Den Gemischen können übliche Additive wie z.B. Entformungsmittel, Stabilisatoren und/oder Fließmittel in der Schmelze zugemischt oder auf der Oberfläche aufgebracht werden.

Als Komponente B enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 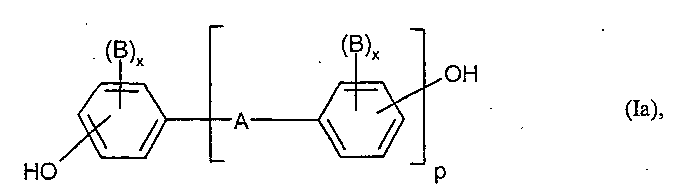 worin
- A: für eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen steht, an das weitere aromatische gegebenenfalls Heteroatome enthaltende Ringe kondensiert sein können,
oder für einen Rest der Formel (II) oder (III) 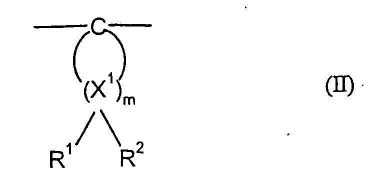 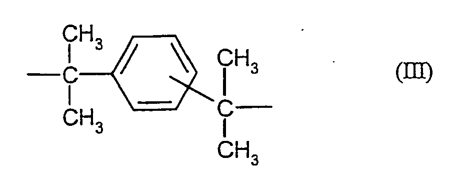 steht, und
- B: für jeweils C₁-C₁₂-Alkyl, vorzugsweise Methyl, Halogen, vorzugsweise Chlor und/oder Brom steht,
- x: jeweils unabhängig voneinander für 0, 1 oder 2 steht,
- p: für 1 oder 0 steht,
- R¹ und R²: für jedes X¹ individuell wählbar ist und unabhängig voneinander für Wasserstoff oder C₁-C₆-Alkyl, vorzugsweise Wasserstoff, Methyl oder Ethyl stehen,
- X¹: für Kohlenstoff steht und
- m: für eine ganze Zahl von 4 bis 7, bevorzugt für 4 oder 5 steht, mit der Maßgabe, dass an mindestens einem Atom X¹, R¹ und R² gleichzeitig für Alkyl stehen.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,'1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung gehören zum Stand der Technik, so auch das 1,1-Bis-(4-hydroxyphenyl)-3,3,5-trimethylcyclohexan, und die Indanbisphenole. Indanbisphenole können zum Beispiel aus Isopropenylphenol oder dessen Derivate oder aus Dimeren des Isopropenylphenols oder dessen Derivate in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964.

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß einzusetzenden Polycarbonate haben bevorzugt ein Gewichtsmittel der molaren Masse (M̅_{w}), welches sich z.B. durch Ultrazentr-ifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäß einzusetzenden Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge einzusetzender Kettenabbrechern beträgt bevorzugt zwischen 0,25 und 10 Mol%, bezogen auf die Summe der jeweils eingesetzten Bisphenole.

Die erfindungsgemäß einzusetzenden Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Erfindungsgemäß geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugt einzusetzende Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol%, bezogen auf Mole an eingesetzten Bisphenolen.

Die Verzweiger können zum Beispiel im Falle der Herstellung des Polycarbonats nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach, dem Schmelzeumesterungsverfahren sind die literaturbekannten Ammoniumsalze und Phosphoniumsalze.

Erfindungsgemäß können auch Copolycarbonate verwendet werden. Copolycarbonate im Sinne der Erfindung sind insbesondere Polydiorganosiloxan-Polycarbonat-Blockcopolymere, deren Gewichtsmittel der molaren Masse (M̅_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt aromatischer Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.%. Die Polydiorganosiloxan-Polycarbonat-Blockcopolymere können zum Beispiel ausgehend von α,ω-Bishydroxyaryloxyendgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekenn-zeichnet, dass sie in der Polymerkette einerseits aromatische Carbonatstruktur-Einheiten (1) und andererseits Aryloxyendgruppen-haltige Polydiorganosiloxane (2) enthalten, 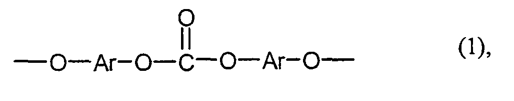 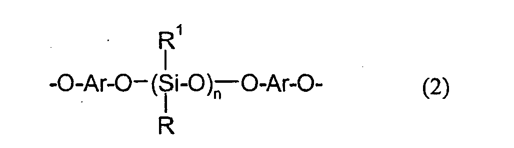 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder haloge- niertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in den vorstehenden Formeln (1) und (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung gehören zum Stand der Technik.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten können übliche Additive wie z.B. Entformungsmittel in der Schmelze zugemischt oder auf der Oberfläche aufgebracht werden. Bevorzugt enthalten die zu verwendenden Polycarbonate bereits Entformungsmittel vor Compoundierung mit den anderen Komponenten der erfindungsgemäßen Formmassen.

Als Komponente C) werden erfindungsgemäß ein Propfpolymer oder eine Mischung aus zwei oder mehreren Propfcopolymeren eingesetzt, die durch Propfpolymerisation von wenigstens einem Vinylmonomeren auf einer Pfropfgrundlage basierend auf olefinisch ungesättigten Olefinenpolymerisaten oder olefinisch ungesättigten Olefincopolymerisaten erhalten werden.

Erfindungsgemäß werden als Komponente C) eingesetzt Pfropfpolymerisate von
C1) 5 bis 95 Gew.-%, vorzugsweise 10 bis 80 Gew.-%, insbesondere 20 bis 50 Gew.-%, wenigstens eines Vinylmonomeren auf
C2) 95 bis 5 Gew.-%, vorzugsweise 90 bis 20, insbesondere 80 bis 20 Gew.-% einer oder mehrerer Pfropfgrundlagen mit Glasübergangstemperaturen der Kautschukkomponente <-10°C, bevorzugt <-20°C, besonders bevorzugt <-30°C auf Basis von kautschukelastischen olefinisch ungesättigten Olefin(co-)polymerisaten.

Die Pfropfgrundlage C2) hat im allgemeinen eine mittlere Teilchengröße (d₅₀-Wert) von 0,05 bis 5 µm, vorzugsweise 0,10 bis 2 µm, besonders bevorzugt 0,15 bis 1 µm.

### Monomere C1) sind vorzugsweise Gemische

C1.1) aus 50 bis 99 Gew.-Teilen, vorzugsweise 60 bis 80 Gew.-Teilen Vinylaromaten und/oder kernsubstituierte Vinylaromaten wie Styrol, α-Methylstyrol, p-Methylstyrol, p-Chlorstyrol und/oder Acrylsäure-(C₁-C₈)-alkylester und/oder Methacrylsäure-(C₁-C₈)-alkylester wie Methylmethacrylat und Ethylmethacrylat und
C1.2) 1 bis 50 Gew.-Teilen, vorzugsweise 40 bis 20 Gew.-Teilen Vinylcyanide (ungesättigte Nitrile wie Acrylnitril und Methacrylnitril) und/oder (Meth)acrylsäure-(C₁-C₈)-alkylester wie Methylmethacrylat, n-Butylacrylat, t-Butylacrylat und/oder Derivate, wie Anhydride und Imide ungesättigter Carbonsäuren, beispielsweise Maleinsäureanhydrid und N-Phenylmaleinimid.

Besonders bevorzugte Monmere C1.1) sind ausgewählt aus mindestens einem der Monomere Styrol, α-Methylstyrol, Methylmethacrylat, besonders bevorzugte Monomere C1.2 sind ausgewählt aus mindestens einem der Monomere Acrylnitril, Maleinsäureanhydrid und Methylmethacrylat.

Besonders bevorzugte Monomere sind C.1.1 Styrol und C1.2 Acrylnitril sowie C.1.1 Styrol und C1.2 Methylmethacrylat.

Bevorzugte Pfropfgrundlagen C.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß C.1.1 und C.1.2), mit der Maßgabe, dass die Glasübergangstemperatur der Komponente E.2 unterhalb < -10°C, vorzugsweise < -20°C, besonders bevorzugt < -30°C liegt und dass die Pfropfgrundlage über olefinisch ungesättigte Gruppen verfügt.

Besonders bevorzugt wird reiner Polybutadienkautschuk eingesetzt.

Besonders bevorzugte Polymerisate C sind z.B. ABS-Polymerisate (Emulsions-, Masse- und Suspensions-ABS), wie sie dem Fachmann aus der Literatur her bekannt sind, beispielsweise aus Ullmann, Enzyklopädie der Technischen Chemie, Bd. 19 (1980), S. 280 ff.. Der Gelanteil der Pfropfgrundlage E.2 beträgt mindestens 30 Gew.%, vorzugsweise mindestens 40 Gew.-% (in Toluol gemessen).

Die Pfropfcopolymerisate C) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C) auch solche Produkte verstanden, die durch (Co)Polymerisation der Pfropfmonomere in Gegenwart der Pfropfgrundlage gewonnen werden und bei der Aufarbeitung mit anfallen.

Besonders bevorzugt als Polymerisate C) sind dem Fachmann als bekannte MBS-Kautschuke bekannt, wie sie z.B. von der Fa. Rohm und Haas unter der Bezeichnung Paraloid^{®} EXL 2600, Paraloid EXL 2650 oder Paraloid^{®} EXL 2691 vertrieben werden und die z.B. in EP-A 0 985 682 beschrieben werden.

Als Komponente D) werden erfindungsgemäß ein oder eine Mischung aus zwei oder mehreren Propfcopolymeren eingesetzt, die durch Propfpolymerisation von wenigstens einem Vinylmonomeren auf einer Pfropfgrundlage basierend auf kautschukelastischen Acrylatpolymerisaten oder auf kautschukelastischen Acrylatcopolymerisaten erhalten werden.

Erfindungsgemäß werden als Komponente D) eingesetzt Pfropfpolymerisate von
D1) 5 bis 95 Gew.-%, vorzugsweise 10 bis 80 Gew.-%, insbesondere 20 bis 50 Gew.-%, wenigstens eines Vinylmonomeren auf
D2) 95 bis 5 Gew.-%, vorzugsweise 90 bis 20, insbesondere 80 bis 20 Gew.-% einer oder mehrerer Pfropfgrundlagen mit Glasübergangstemperaturen der Kautschukkomponente < 10°C, bevorzugt < 0°C, besonders bevorzugt < -10°C auf Basis von kautschukelastischen Acrylatpolymerisaten oder Acrylatcopolymerisaten.

Die Pfropfgrundlage D2) hat im allgemeinen eine mittlere Teilchengröße (d₅₀-Wert) von 0,05 bis 5 µm, vorzugsweise 0,10 bis 2 µm, besonders bevorzugt 0,15 bis 1 µm.

### Monomere D1) sind vorzugsweise Gemische

D1.1) aus 50 bis 99, vorzugsweise 60 bis 80 Gew.-Teilen Vinylaromaten und/oder kernsubstituierte Vinylaromaten wie Styrol, α-Methylstyrol, p-Methylstyrol, p-Chlorstyrol und/oder Acrylsäure-(C₁-C₈)-alkylester und/oder Methacrylsäure-(C₁-C₈)-alkylester wie Methylmethacrylat und Ethylmethacrylat und
D1.2) 1 bis 50, vorzugsweise 40 bis 20 Gew.-Teilen Vinylcyanide (ungesättigte Nitrile wie Acrylnitril und Methacrylnitril) und/oder (Meth)acrylsäure-(C₁-C₈)-alkylester wie Methylmethacrylat, n-Butylacrylat, t-Butylacrylat und/oder Derivate, wie Anhydride und Imide ungesättigter Carbonsäuren, beispielsweise Maleinsäureanhydrid und N-Phenylmaleinimid.

Besonders bevorzugte Monmere D1.1) sind ausgewählt aus mindestens einem der Monomere Styrol, α-Methylstyrol, Methylmethacrylat, besonders bevorzugte Monomere D1.2) sind ausgewählt aus mindestens einem der Monomere Acrylnitril, Maleinsäureanhydrid und Methylmethacrylat.

Besonders bevorzugte Monomere sind D.1.1 Styrol und D1.2 Acrylnitril.

Geeignete Acrylatkautschuke gemäß D.2 der Polymerisate D sind vorzugsweise Polymerisate aus Acrylsäurealkylestern, gegebenenfalls mit bis zu 40 Gew.-%, bezogen auf D.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole, Dicylopentadien, 5-Ethylidennorbomen; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2.

Bei cyclischen vernetzenden Monomeren mit mindestens 3 ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind z. B. Acrylnitril, Styrol, α-Methylstyrol, Acrylamide, Vinyl-C₁-C₆-alkylether, Methylmethacrylat. Bevorzugte Acrylatkautschuke als Pfropfgrundlage D.2 sind Emulsionspolymerisate, die einen Gelgehalt von mindestens 60 Gew.-% aufweisen. Die Herstellung der Pfropfgrundlage D.2. kann in einem Schritt oder in mehreren Schritten erfolgen. Zur Pfropfreaktion kann auch ein Gemisch aus verschiedenen Pfropfgrundlagen gemäß der Beschreibung eingesetzt werden. Insbesondere können auch verschiedene Pfropfgrundlagen eingesetzt werden, die sich in der mittleren Partikelgröße untescheiden.

Besonders bevorzugt als erfindungsgemäße Komponente D) sind ASA-Kautschuke, wie sie z.B. in WO 2000046296, in EP 0960145 oder in DE 4229913 beschrieben sind.

Als Komponente E) enthalten die erfindungsgemäßen Zusammensetzungen bekannte UV-Stabilisatoren wie sie zum Beispiel beschrieben sind in Gächter, Müller, Kunststoff-Additive, 3. Ausgabe, Hanser-Verlag, München, Wien, 1989 und im Plastics Additives Handbook, 5th Edition, Hanser-Verlag, München, 2001, S. 97-137, 141-154, 178-183, 188-192, 369-372, 389-394. Die UV-Stabilisatoren können alleine oder in Mischung bzw. in Form von Masterbatchen eingesetzt werden.

Bevorzugte erfindungsgemäß einzusetzende UV-Stabilisatoren sind sterisch gehinderte Phenole, sterisch gehinderte Amine (HALS = **H**indered **A**mine **L**ight **S**tabilizer), Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen.

Besonders bevorzugt sind sterisch gehinderte Amine vom HALS-Typ, Benzotriazole, Benzotriazine und Bezopyrimidine.

Die vorzugsweise einzusetzenden sterisch gehinderten Amine vom HALS-Typ lassen sich von der in (3) gezeigten allgemeinen Struktur ableiten

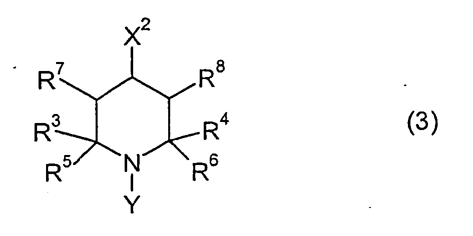

Dabei können jeweils unabhängig voneinander sein:
Y: H, Acyl, O-Radikal, Alkyl, Alkenyl, Alkoxyalkyl, Arylalkyl,
X²: -OR, NR₂, Maleinimid,
R⁷ und R⁸ unabhängig von einander = H, Alkyl, Alkenyl, Arylalkyl, bevorzugt = H
R³, R⁴, R⁵, R⁶ unabhängig von einander H, Alkyl, Phenyl, Alkylaryl, aromatischer Heterozyklus enthaltend Sauerstoff, Schwefel oder Stickstoff; bevorzugt sind R³-R⁶ Methyl

Die vorzugsweise einzusetzenden HALS-Stabilisatoren werden zum Beispiel beschrieben in US 4895901, US 4210612 und US 5015682..

Die vorzugsweise einzusetzenden Benzotriazole lassen sich allgemein von der in (4) gezeigten Struktur ableiten.

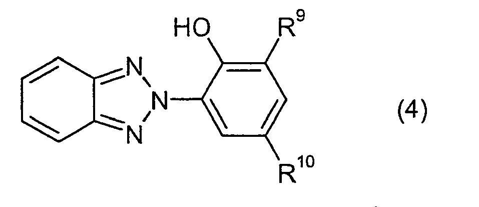

Dabei können R⁹ und R¹⁰ unabhängig von einander aus der Gruppe bestehend aus **H**, Alkyl (insbesondere Methyl, Ethyl, Propyl), Cyloalkyl, Halogen, Haloalkyl, Alkoxy, Alkylen, Aryl, Alkyl-Aryl oder Kombination dieser ausgesucht sein.

Besonders bevorzugt sind R⁹ = R¹⁰ = (2-Phenyl-)isopropyl, R⁹ = H und R¹⁰ = 2-(2,4,4-Trimethyl)-pentyl, R⁹ = H und R¹⁰ = Methyl, R⁹ = R¹⁰ = t-Butyl, R⁹ = t-Butyl und R¹⁰ = Methyl, R⁹ = R¹⁰ = 2-(2-Methyl)-butyl, R⁹ = iso-Butyl und R¹⁰ = 2-(2,4,4-Trimethyl)-pentyl.

Die beschriebenen erfindungsgemäß bevorzugt einzusetzenden Benzotriazole werden zum Beispiel von der Firma Ciba Spezialchemikalien, Basel, Schweiz unter der Handelsproduktbezeichnung Tinuvin^{®} vertrieben.

Die vorzugsweise einzusetzenden Hydroxyphenyltriazin und -pyrimidin UV-Stabilisatoren bestehen aus zwei Phenyl- und einer Resorcin-Gruppe, die an einen Triazin- oder Pyrimidin-Ring gebunden sind, wie beschrieben in US 6 239 276 und US 5 597 854. Die vorzugsweise einzusetzenden Hydroxyphenyltriazine und -pyrimidine lassen sich allgemein von der in (5) gezeigten allgemeinen Struktur ableiten.

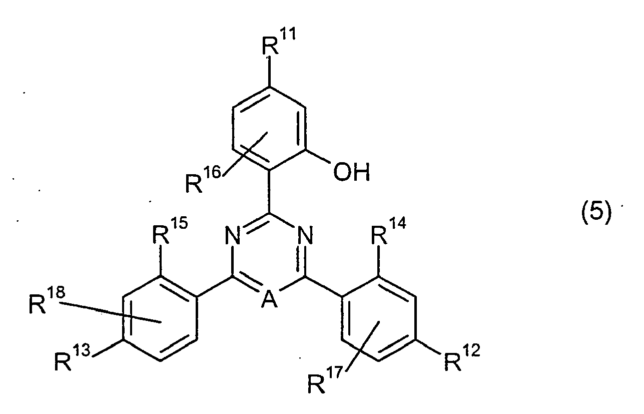

In Formel (5) können A = N oder CH sein und R¹¹ bis R¹⁸ unabhängig von einander aus der Gruppe bestehend aus H, Alkyl (insbesondere Methyl, Ethyl, Propyl), Cyloalkyl, Halogen, Haloalkyl, Alkoxy, Alkylen, Aryl, Alkyl-Aryl oder Kombination dieser ausgesucht sein.

Beispiele für kommerziell verfügbare Vertreter der bevorzugt einzusetzenden Hydroxyphenyltriazine sind Tinuvin^{®} 1577 (CAS-Nummer 147315-50-2, Ciba Spezialcheimkalien, Basel, Schweiz) oder Cyasorb^{®} UV 1164 (Cyctec Industries).

Als Komponente F) enthalten die erfindungsgemäßen Zusammensetzungen übliche Farbmittel und/oder Pigmente, wie z.B. Titandioxid, Ultramarinblau, Eisenoxid, Russ, Phthalocyanine, Chinacridone, Perylene, Nigrosin und Anthrachinone und deren Derivate eingesetzt werden. Insbesondere geeignet sind auch die in US-A 6 476 158 beschriebenen Farbmittel zur Verbesserung des Glanzes nach Bewitterung. Die Farbmittel und/oder Pigmente können in Substanz zugegebenen werden oder als Masterbatche beispielsweise in Komponente A), Kombonente B), Komponente C), Polyethylen, Polypropylen, Wachsen oder Paraffin.

Die erfindungsgemäß einzusetzenden Farbmittel werden zum Beispiel auch beschrieben in Plastics Additives Handbook, 5th Edition, Hanser-Verlag, München, 2001, S. 822-850.

Als Komponente G) können die Zusammensetzungen erfindungsgemäß mindestens difunktionelle, niedermolekulare und oligomere Verbindungen enthalten, die über mindestens eine Epoxidgruppe verfügen.

Bevorzugte Epoxidhaltige Verbindungen als Komponente G sind allgemein:
1. Polyglydicyl- oder Poly-(β-methylglycidyl)-ether erhältlich durch Umsetzung einer Verbindung mit mindestens zwei freien alkoholischen oder phenolischen Hydroxygruppen und/oder phenolischen Hydroxygruppen und einem geeignet substituierten Epichlorhydrin unter, alkalischen Bedingungen, oder in Anwesenheit eines sauren Katalysators und anschließender Alkalibehandlung.
   Ether dieses Typs leiten sich beispielsweise ab von acyclischen Alkoholen, wie Ethylenglykol, Diethylenglykol und höhereren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit, sowie von Polyepichlorhydrinen.
   Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-82-hydroxyethyl)-anilin oder p,p'-Bis-(2-hydroxyethyl-amino)-diphenylmethan.
   Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltenen Kondensationsprodukten von Phenolen mit Formaldehyd wie Phenol-Novolake.
2. Difunktionelle, cycloaliphatische Epoxidhaltige Verbindungen, die das in (6) gezeigte Strukturfragment enthalten 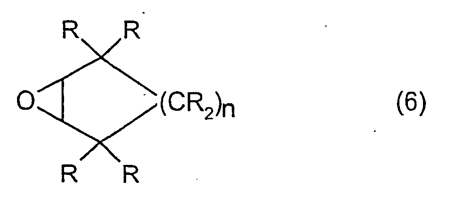
   In Formel (6) kann R jeweils unabhängig von einander ausgewählt aus der Gruppe enthaltend H, Alkyl, Aryl, Halogen, Halogenalkyl, Alkoxy, Carboalkoxy, Carbonyl sein und n ausgewählt sein aus 0 bis 8, bevorzugt 0 bis 2.
   Bevorzugte Beispiele aus der Klasse der erfindungsgemäß gegebenenfalls einsetzbaren cycloaliphatischen epoxidhaltigen Verbindungen sind 3,4-Epoxicyclohexyl-3,4-epoxicyclohexylcarboxylat (Handelsprodukt ERL 4221 der Union Carbide), Bis- (3,4-Epoxicyclohexylmethyl)adipat, Vinylcyclohexen-Diepoxid, 3,4-Epoxi-6-methyl-cyclohexylmethyl-3',4'-epoxi-6'-methylcyclohexan carboxylat, 2,3-Epoxicyclohexyl-3,4-epoxicyclohexylcarboxylat, 4-(3,4-Epoxi-5-methylcyclohexyl)-butyl-3',4'-epoxicyclohexylcarboxylat, 3,4-Epoxi-cyclohexyl-ethylenoxid.
3. Poly-(N-glycidyl)-Verbindungen erhältlich durch Dehydrochlorierung der Reaktionsprodukte von Epichlorhydrin mit Aminen. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenyl oder N,N,O-Triglycidyl-p-aminophenol.

Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.

Bevorzugt einsetzbare Stickstoff-Verbindungen sind auch Stickstoff-haltige Heterozyklen wie Triazine, Brabitursäuren, Hydantoine, Uracile, pyromellithsäurediimide, piperidine, piperazine, piperazindione und Isocyanurate.

Als Komponente H) können die thermoplastischen Formmassen einen Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern enthalten. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit und/oder Glasfasern. Am meisten bevorzugt werden Füllstoffe auf Basis von Talk.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmigere Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER.

Am meisten bevorzugt als Komponente H) werden mineralische Füllstoffe auf der Basis von Talk. Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen.

Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäß einzusetzenden mineralischen Füllstoffe auf Basis von Talk haben bevorzugt eine obere Teilchen- bzw. Korngröße d97 kleiner 50 µm, bevorzugt kleiner 10 µm, besonders bevorzugt kleiner 6 µm und insbesondere bevorzugt kleiner 2,5 µm. Als mittlere Korngröße d50 wird bevorzugt ein Wert kleiner 10 µm, bevorzugt kleiner 6 µm, besonders bevorzugt kleiner 2 µm und insbesondere bevorzugt kleiner 1 µm gewählt. Die d97- und d50-Werte von den Füllstoffen werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Besonders bevorzugt können erfindungsgemäß auch Glasfasern eingesetzt werden, die im allgemeinen einen Faserdurchmesser zwischen 7 und 18 µm, bevorzugt zwischen 9 und 15 µm haben. Diese können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Gebräuchliche Silanverbindungen zur Vorbehandlung mit einem Schlichtesystem haben beispielsweise die allgemeine Formel

(X-(CH₂)q)k-Si-(O-CrH2r+1)4-k

in der die Substituenten folgende Bedeutung haben:
- x: 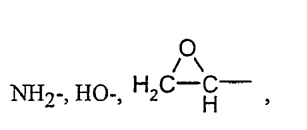
- q: eine ganze Zahl von 2 bis 10, bevorzugt 3 bis 4
- r: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen können im allgemeinen in Mengen von 0,05 bis 2 Gew.-%, vorzugsweise 0,5 bis 1,5 Gew.-% und insbesondere 0,8 bis 1 Gew.-% bezogen auf den mineralischen Füllstoff zur Oberflächenbeschichtung eingesetzt werden.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Die Teilchendurchmesser am fertigen Produkt können dabei zum Beispiel dadurch bestimmt werden, dass elektronenmikroskopische Aufnahmen von Dünnschnitten der Polymermischung ausgenommen und mindestens 25, bevorzugt mindestens 50 Füllstoffteilchen für die Auswertung herangezogen werden.

Die erfindungsgemäßen Zusammensetzungen können als Komponente I) weiterhin übliche Zusatzstoffe enthalten, die im allgemeinen bis 15 Gew.%, vorzugsweise in einer Menge von 0,01 bis 10 Gew.-%, besonders bevorzugt 0,05 bis 5 Gew.%, insbesondere bevorzugt 0,1 bis 3 Gew.-%, bezogen auf das Gesamtgewicht der Formmassen, zugesetzt werden können.

Alle üblichen Additive wie z.B. Stabilisatoren (zum Beispiel Thermostabilisatoren), Antistatika, Fließhilfsmittel, Entformungsmittel, Brandschutzadditive, Emulgatoren, Nukleierungsmittel, Weichmacher, Gleitmittel, pH-Wert erniedrigende Additive (z.B. Carboxylgruppen enthaltende Verbindungen), Additive zur Erhöhung der Leitfähigkeit können dabei in Frage kommen. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden. Die Additive können zugemischt und/oder auf die Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Nukleierungsmittel können z.B. Natriumphenylphosphinat, Aluminiumoxid, Siliziumdioxid sowie bevorzugt Talkum und die weiter vorne beschriebenen Nukleierungsmittel eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Um leitfähige Formmassen zu erhalten, können Russe, Leitfähigkeitsrusse, Carbonfibrillen, nanoskalige Graphitfasern (Nanotubes), Graphit, leitfähige Polymere, Metallfasern sowie andere übliche Additive zur Erhöhung der Leitfähigkeit zugesetzt werden.

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 geeignet, z.B. Triphenylphosphat (TPP), Resorcinol-bis-(diphenylphosphat) einschließlich Oligomere sowie Bisphenol-A-bis-diphenylphosphat einschließlich Oligomere (vgl. z.B. EP-A 0 363 608 und EP-A 0 640 655), Melaminphosphat, Melaminpyrophosphat, Melaminpolyphosphat und deren Mischungen. Als Stickstoffverbindungen kommen insbesondere Melamin und Melamincyanurat infrage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und und Tetrafluorethylenpolymerisate können zugesetzt werden. Die Flammschutzmittel, gegebenenfalls mit einem Synergisten, wie Antimonverbindungen, und Antidripping-Mittel werden im allgemeinen bis zu einer Menge von 30 Gew.-%, vorzugsweise 20 Gew.-% (bezogen auf die Gesamtzusammensetzung) eingesetzt.

Als Zusatzstoffe können auch Verstärkungsstoffe z.B. in Form von Glasfasern zugesetzt werden.

Gegenstand der Erfindung sind weiterhin ein Verfahren zur Herstellung der Zusammensetzungen, die Verwendung der erfindungsgemäßen Zusammensetzung zur Herstellung von Halbzeugen und Formteilen sowie daraus hergestellte Halbzeuge und Formteile.

Die Herstellung der erfindungsgemäßen Zusammensetzungen erfolgt nach bekannten Verfahren durch Mischen der Komponenten. Es kann vorteilhaft sein, einzelne Komponenten vorzumischen. Die Vormischung kann dabei sowohl als Dry-Blend erfolgen als auch durch gemeinsames Kneten, Extrudieren oder Verwalzen der Komponenten. Weiterhin kann das Einmischen einzelner Komponenten, insbesondere von Stabilisatoren, Additiven und Farbmitteln bereits während der Synthese der erfindungsgemäß eingesetzten Polymeren erfolgen. Vorzugsweise geschieht das Mischen der Komponenten A bis D sowie weiterer Bestandteile bei Temperaturen von 220 bis 330°C durch gemeinsames Kneten, Extrudieren oder Verwalzen der Komponenten.

Die erfindungsgemäßen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Die Formteile eignen sich aufgrund der hohen Farbhomogenität besonders für Anwendungen, die sichtbar und optisch bedeutend sind. Die Formteile können erfindungsgemäß unlackiert oder mit einem transparenten Klarlacksystem beschichtet eingesetzt werden. Selbstverständlich können die Formteile aber auch mit farbgebendem Basislack lackiert werden. Die Formteile können klein- oder großteilig sein und für Außen- oder Innenanwendungen eingesetzt werden. Bevorzugt werden großteilige Formteile für den Fahrzeugbau, insbesondere den Automobilsektor hergestellt. Insbesondere können aus den erfindungsgemäßen Formmassen Karosserieaußenteile wie z.B. Kotflügel, Heckklappen, Motorhauben, Stoßfänger, Ladeflächen, Abdeckungen für Ladeflächen, Autodächer, Lufteinlassgitter, Spoiler oder andere Karosserieanbauteile gefertigt werden.

Formteile bzw. Halbzeuge aus den erfindungsgemäßen Formmassen/Zusammensetzungen können sich auch im Verbund mit weiteren Werkstoffen wie z.B. Metall oder Kunststoff befinden. Die erfindungsgemäßen Formmassen bzw. die Formteile/Halbzeuge aus den erfindungsgemäßen Formmassen können durch übliche Techniken des Verbindens und Zusammenfügens mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkstoffen oder sich selbst für die Herstellung von Fertigteilen wie z.B. Karosserieaußenteilen eingesetzt werden.

Die erfindungsgemäßen Formmassen können auch für zahlreiche weitere Anwendungen verwendet werden. Beispielsweise seien genannt die Verwendung in der Elektro- und Elektroniktechnik, sowie im Bausektor. In den genannten Einsatzgebieten können Formteile aus den erfindungsgemäßen Formmassen zum Beispiel als Lampenabdeckungen, als Sicherheitsscheiben, als Gehäusematerial für elektronische Geräte, als Gehäusematerial für Haushaltsgeräte, als Platten zur Herstellung von Abdeckungen verwendet werden.

Die erfindungsgemäßen Zusammensetzungen zeichnen sich durch eine sehr gute Farbhomogenität und durch sehr gute Bewitterungsstabilität aus. Darüber hinaus erfüllen sie hohe Anforderungen hinsichtlich Verarbeitungsstabilität, Fließfähigkeit der Schmelze, Zähigkeit, Tieftemperaturzähigkeit, Steifigkeit, Wärmeformbeständigkeit, thermische Ausdehnung, Oberflächenqualität, Lackierbarkeit, Chemikalienbeständigkeit und Kraftstoffbeständigkeit.

### Beispiele

### Komponente A

Polybutylenterephthalat Typ A1: Es handelt sich um Polybutylenterephthalat mit einer intrinsischen Viskosität IV von 0,93 cm³/g, Handelsprodukt Pocan^{®} B1300 der Bayer AG, Leverkusen.

Die intrinsische Viskosität wird gemessen in Phenol/o-Dichlorbenzol (1:1 Gew.-Teile) bei 25°C..

### Komponente B

### Polycarbonat Typ B1:

Lineares Polycarbonat (Malcrolon^{®} 2405 von Bayer AG, Leverkusen, Deutschland) auf Basis Bisphenol A mit einer Viskosität ηrel. von ca. 1,29 (Meßbedingungen: 5 g Polycarbonat pro Liter Methylenchlorid, 25°C) und einem Molekulargewicht Mw von ca. 29 000 g/mol (bestimmt mit GPC-Methoden gegen Polycarbonatstandard).

### Komponente C1

Es handelt sich um Paraloid^{®} EXL 2650 von Rohm und Haas Deutschland GmbH, Frankfurt.

### Komponente C2

Es handelt sich um ein Pfropfcopolymerisat von Acrynlnitril und Styrol auf einer Pfropfgrundlage von Polybutadien, Zwischenprodukt der Bayer AG, Leverkusen mit einem Polybutadienanteil von 75-Gew-% und einem Styrol-Anteil in der Schale von 28-Gew-%.

### Vergleichs-Komponente V1

Es handelt sich um den AES-Kautschuk Royaltuf^{®} 970 E (frühere Bezeichnung Blendex^{®} WX 270) der Crompton Corporation, Crompton GmbH Deutschland, Bergkamen

### Komponente D1

Es handelt sich um ein Pfropfcopolymerisat von Acrynlnitril und Styrol auf einer Pfropfgrundlage von teilvernetztem Polybutylacrylat, Centrex^{®} 57 WBA, Zwischenprodukt der Bayer Corp., Pittsburgh.

### Komponente D2

Es handelt sich um Paraloid^{®} EXL 3361 (ein Kern-Schale-Schlagzähmodifikator auf Basis eines teilvernetzten Acrylatkerns) der Fa. Rohm & Haas Deutschland, Frankfurt

### Komponente E

Es handelt sich um Tinuvin^{®} 350 der Fa. Ciba Geigy, Basel.

### Komponente F

Es handelt sich um Ruß, Typ Black Pearls^{®} 800 der Fa. Cabot GmbH, Hanau.

### Komponente G

Es handelt sich um Araldit^{®} GT 7071 (Hydrolysestabilisator basierend auf einem Phenol-Epichlorhydrin-Reaktionsprodukt) der Firma Huntsman Advanced Materials Deutschland GmbH, Bergkamen.

Daneben werden als Additive handelsübliche Verarbeitungshilfsmittel eingesetzt.

Compoundierungen erfolgten auf einem Zweiwellenextruder des Typs ZSK32 (Werner und Pfleiderer) bei Massetemperaturen von 250 bis 290°C.

Die Prüfkörper wurden auf einer Spritzgießmaschine des Typs Arburg 320-210-500 bei Massetemperaturen von 260 bis 280°C und Werkzeugtemperaturen von 70 bis 90°C verspritzt.

Die Ausprüfungen der erfindungsgemäßen Formmassen erfolgte nach folgenden Methoden:
Vicat B: Wärmeformstabilität bzw. Wärmeformbeständigkeit nach DIN ISO 306/B 120 in Silikonöl.
Izod-Schlagzähigkeit: Zähigkeit nach ISO 180 Methode 1 U bei -30°C.
Izod-Kerbschlagzähigkeit: Zähigkeit nach ISO 180 Methode 1 A bei 23°C
Zug-E-Modul und Zugfestigkeit nach DIN / EN / ISO 527-2/1A.
MVR: Fließfähigkeit nach DIN/ISO 1133 bei 260°C und 5 kg.
Farbhomogenität: Bestimmung der Farbhomogenität der Oberfläche durch optische Begutachtung.
"+" bedeutet eine homogene Einfärbung ohne Ausbildung von Streifen geringerer Farbintensität senkrecht zur Fließrichtung (Tigerstreifen)
"o" bedeutet eine weitgehend homogene Einfärbung mit leichter Ausbildung von Streifen geringerer Farbintensität senkrecht zur Fließrichtung
"-" bedeutet eine inhomogene Einfärbung mit starker Ausbildung von Streifen senkrecht zur Fließrichtung.

Die Beurteilung der Farbhomogenität erfolgte an 150x105x1,6mm-Platten, die mit einer Massetemperatur von 270°C, einer Werkzeugtemperatur von 80°C und einer Füllgeschwindigkeit von 50 mm/s über einen Filmanguß an einer 105 mm-Seite hergestellt wurden.

Wie aus Tabelle 1 ersichtlich weisen die erfindungsgemäßen Formmassen die geforderte Kombination aus sehr guter Farbhomogenität und guter Hydrolysestabilität (>60 % der Anfangszugfestigkeit nach Hydrolyse) bei gleichzeitig guten mechanischen Eigenschaften auf. Im Vergleich zu den Vergleichsbeispielen 2 und 3 sind die erfindungsgemäßen Formmassen darüber hinaus deutlich UV-stabiler, weil der Anteil an UV-sensitiven Komponenten C deutlich niedriger ist.

Zusammensetzung und Eigenschaften der erfindungsgemäßen thermoplastischen Formmassen gehen aus Tabellen 1 hervor.

**Tabelle 1**

| **Beispiele** | | **Bsp.1** | **Bsp.2** | **Bsp.3** | **Vgl.1** | **Vgl.2** | **Vgl.3** | **Vgl.4** | **Vgl. 5** | **Vgl.6** |
|---|---|---|---|---|---|---|---|---|---|---|
| Komponente A, PBT | [%] | 35,9 | 35,9 | 34,4 | 34,4 | 34,4 | 35,9 | 35,9 | 35,9 | 35,9 |
| Komponente B, PC | [%] | 50,0 | 50,0 | 50,0 | 50,0 | 50,0 | 50,0 | 50,0 | 50,0 | 50,0 |
| Komponente C1 | [%] | 6 | -- | 6 | -- | 12 | -- | -- | -- | -- |
| Komponente C2 | [%] | -- | 6 | -- | -- | -- | 12 | -- | -- | -- |
| Komponente V1 | [%] | -- | -- | -- | 6 | -- | -- | 12 | -- | -- |
| Komponente D 1 | [%] | 6 | 6 | -- | -- | -- | -- | -- | 12 | -- |
| Komponente D2 | [%] | -- | -- | 6 | 6 | -- | -- | -- | -- | 12 |
| Komponente E | [%] | 0,3 | 0,3 | 0,3 | 0,3 | 0,3 | 0,3 | 0,3 | 0,3 | 0,3 |
| Komponente F | [%] | 1,5 | 1,5 | 1,5 | 1,5 | 1,5 | 1,5 | 1,5 | 1,5 | 1,5 |
| Komponente G | [%] | 1,5 | 1,5 | 1,5 | 1,5 | 1,5 | 1,5 | 1,5 | 1,5 | 1,5 |
| Additive | [%] | 0,3 | 0,3 | 0,3 | 0,3 | 0,3 | 0,3 | 0,3 | 0,3 | 0,3 |
| Vicat B | [°C] | 116 | 116 | 114 | 119 | 91 | 114 | 115 | 119 | 120 |
| Izod-Schlagzähigkeit -30°C | [kJ/m²] | n.g.*) | n.g.*) | 9 x n.g.*) 1 x 120 | 9 x n.g*) 1 x 47 | n.g.*) | n.g.*) | 9 x n.g.*) 1 128 | n.g.*) | 9 x n.g.*) 1 139 |
| Izod-Kerbschlagzähigkeit 23°C | [kJ/m²] | 31,4 | 34,9 | 20 | 38 | 32,7 | 40,4 | 37,7 | 16,1 | 42,9 |
| Zugmodul | [MPa] | 2270 | 2270 | 2220 | 2230 | 2130 | 2230 | 2230 | 2340 | 2170 |
| Zugfestigkeit | [MPa] | 57,1 | .55,2 | 57 | 52,7 | 55 | 54,6 | 50,8 | 56,6 | 54,8 |
| Zugfestigkeit nach Hydrolyse (100% r.H., 100°C, 10d) | [MPa] | | 38,1 | 58,2 | 34,3 | 59,5 | 39,9 | 14,2 | 58,0 | 56,4 |
| MVR (260°C/5 kg) | [cm³/10 min] | 19,3 | 15,0 | 21,7 | 21,3 | 12,4 | 18,2 | 17,4 | 12,9 | 22 |
| Farbhomogenität | | + | + | 0 | - | + | + | - | 0 | 0 |

| | | | | | | | | | | |
|---|---|---|---|---|---|---|---|---|---|---|
| *) n.g.: = nicht gebrochen | | | | | | | | | | |

## Patentansprüche

1. Zusammensetzung enthaltend
A) 4 bis 80 Gew.-Teile mindestens eines Polyalkylenterephthalats,
B) 10 bis 90 Gew.-Teile mindestens eines aromatisches Polycarbonates,
C) 1,5 bis 30 Gew.-Teile mindestens eines Pfropfpolymerisats auf Basis von Polybutadien als Kautschukkomponente,
D) 1,5 bis 30 Gew.-Teile mindestens eines Pfropfpolymerisats auf Basis von Acrylaten als Kautschukkomponente,
E) 0,01 bis 5 Gew.-Teile UV-Stabilisatoren,
F) 0,01 bis 10 Gew.-Teile Farbmittel
G) 0 bis 5 Gew.-Teile Hydrolysestabilisatoren,
H) 0 bis 54 Gew.-Teile mindestens eines teilchenförmigen mineralischen Füllstoffs,
I) 0 bis 10 Gew.-Teile weiterer Additive.

2. Zusammensetzung gemäß Anspruch 1, worin sich C) zusammensetzt aus Pfropfpolymerisaten von
C1) 5 bis 95 Gew.%, wenigstens eines Vinylmonomeren auf
C2) 95 bis 5 Gew.-% einer oder mehrerer Pfropfgrundlagen mit Glasübergangstemperaturen der Kautschukkomponente <-10°C auf Basis von Polybutadien.

3. Zusammensetzung gemäß Anspruch 2, wobei C1) eine Mischung aus
C1.1) 50 bis 99 Gew.-Teilen Styrol, α-Methylstyrol, p-Methylstyrol, p-Chlorstyrol und/oder Acrylsäure-(C₁-C₈)-alkylester und/oder Methacrylsäure-(C₁-C₈)-alkylester und
C1.2) 1 bis 50 Gew.-Teilen Vinylcyanide und/oder (Meth)acrylsäure-(C₁-C₈)-alkylester und/oder Anhydride und Imide ungesättigter Carbonsäuren
ist.

4. Zusammensetzung gemäß Anspruch 1 oder 2, wobei sich D) zusammensetzt aus Pfropfpolymerisaten von
D1) 5 bis 95 Gew.-%, wenigstens eines Vinylmonomeren auf
D2) 95 bis 5 Gew.-% einer oder mehrerer Pfropfgrundlagen mit Glasübergangstemperaturen der Kautschukkomponente <10°C auf Basis von Acrylat-Kautschuken.

5. Zusammensetzungen gemäß einem oder mehreren der vorangegangenen Ansprüche, wobei Polyethylenterephthalat als Komponente A eingesetzt wird.

6. Verwendung der Zusammensetzungen gemäß einem oder mehreren der vorangegangenen Ansprüche zur Herstellung von Formteilen.

7. Verfahren zur Herstellung von Formteilen, Formmassen oder Halbzeugen, **dadurch gekennzeichnet, dass** man Zusammensetzungen enthaltend
A) 4 bis 80 Gew.-Teile mindestens eines Polyalkylenterephthalats,
B) 10 bis 90 Gew.-Teile mindestens eines aromatisches Polycarbonates,
C) 1,5 bis 30 Gew.-Teile mindestens eines Pfropfpolymerisats auf Basis von Polybutadien als Kautschukkomponente,
D) 1,5 bis 30 Gew.-Teile mindestens eines Pfropfpolymerisats auf Basis von Acrylaten als Kautschukkomponente,
E) 0,01 bis 5 Gew.-Teile UV-Stabilisatoren,
F) 0,01 bis 10 Gew.-Teile Farbmittel
G) 0 bis 5 Gew.-Teile Hydrolysestabilisatoren,
H) 0 bis 54 Gew.-Teile mindestens eines teilchenförmigen mineralischen Füllstoffs,
I) 0 bis 10 Gew.-Teile weiterer Additive einsetzt.

8. Formmassen, Halbzeuge oder Formteile erhältlich aus Zusammensetzungen enthaltend
A) 4 bis 80 Gew.-Teile mindestens eines Polyalkylenterephthalats,
B) 10 bis 90 Gew.-Teile mindestens eines aromatisches Polycarbonates,
C) 1,5 bis 30 Gew.-Teile mindestens eines Pfropfpolymerisats auf Basis von Polybutadien als Kautschukkomponente,
D) 1,5 bis 30 Gew.-Teile mindestens eines Pfropfpolymerisats auf Basis von Acrylaten als Kautschukkomponente,
E) 0,01 bis 5 Gew.-Teile UV-Stabilisatoren,
F) 0,01 bis 10 Gew.-Teile Farbmittel
G) 0 bis 5 Gew.-Teile Hydrolysestabilisatoren,
H) 0 bis 54 Gew.-Teile mindestens eines teilchenförmigen mineralischen Füllstoffs,
I) 0 bis 10 Gew.-Teile weiterer Additive.

9. Formteile gemäß Anspruch 8, **dadurch gekennzeichnet, dass** diese mit einem Klarlack lackiert werden.

10. Verwendung der Formteile gemäß der Ansprüche 8 und 9 in Kfz-Außenanwendungen.

## Claims

1. Composition comprising
A) 4 to 80 parts by wt. of at least one polyalkylene terephthalate,
B) 10 to 90 parts by wt. of at least one aromatic polycarbonate,
C) 1.5 to 30 parts by wt. of at least one graft polymer based on polybutadiene as the rubber component,
D) 1.5 to 30 parts by wt. of at least one graft polymer based on acrylates as the rubber component,
E) 0.01 to 5 parts by wt. of UV stabilizers,
F) 0.01 to 10 parts by wt. of colouring agent,
G) 0 to 5 parts by wt. of hydrolysis stabilizers,
H) 0 to 54 parts by wt. of at least one particulate mineral filler,
I) 0 to 10 parts by wt. of further additives.

2. Composition according to claim 1, wherein C) is composed of graft polymers of
C1) 5 to 95 wt.% of at least one vinyl monomer on
C2) 95 to 5 wt.% of one or more graft bases having glass transition temperatures of the rubber component of <-10 °C and based on polybutadiene.

3. Composition according to claim 1 or 2, wherein C1) is a mixture of
C1.1) 50 to 99 parts by wt. of styrene, α-methylstyrene, p-methylstyrene, p-chlorostyrene and/or acrylic acid (C₁-C₈)-alkyl esters and/or methacrylic acid (C₁-C₈)-alkyl esters and
C1.2) 1 to 50 parts by wt. of vinyl cyanides and/or (meth) acrylic acid (C₁-C₈) -alkyl esters and/or anhydrides and imides of unsaturated carboxylic acids.

4. Composition according to claim 1 or 2, wherein D) is composed of graft polymers of
D1) 5 to 95 wt.% of at least one vinyl monomer on
D2) 95 to 5 wt.% of one or more graft bases having glass transition temperatures of the rubber component of <10 °C and based on acrylate rubbers.

5. Compositions according to one or more of the preceding claims, wherein polyethylene terephthalate is employed as component A.

6. Use of the compositions according to one or more of the preceding claims for the production of mouldings.

7. Process for the production of mouldings, moulding compositions or semi-finished products, **characterized in that** compositions comprising
A) 4 to 80 parts by wt. of at least one polyalkylene terephthalate,
B) 10 to 90 parts by wt. of at least one aromatic polycarbonate,
C) 1.5 to 30 parts by wt. of at least one graft polymer based on polybutadiene as the rubber component,
D) 1.5 to 30 parts by wt. of at least one graft polymer based on acrylates as the rubber component,
E) 0.01 to 5 parts by wt. of UV stabilizers,
F) 0.01 to 10 parts by wt. of colouring agent,
G) 0 to 5 parts by wt. of hydrolysis stabilizers,
H) 0 to 54 parts by wt. of at least one particulate mineral filler,
I) 0 to 10 parts by wt. of further additives are employed.

8. Moulding compositions, semi-finished products or mouldings obtainable from compositions comprising
A) 4 to 80 parts by wt. of at least one polyalkylene terephthalate,
B) 10 to 90 parts by wt. of at least one aromatic polycarbonate,
C) 1.5 to 30 parts by wt. of at least one graft polymer based on polybutadiene as the rubber component,
D) 1.5 to 30 parts by wt. of at least one graft polymer based on acrylates as the rubber component,
E) 0.01 to 5 parts by wt. of UV stabilizers,
F) 0.01 to 10 parts by wt. of colouring agent,
G) 0 to 5 parts by wt. of hydrolysis stabilizers,
H) 0 to 54 parts by wt. of at least one particulate mineral filler,
I) 0 to 10 parts by wt. of further additives.

9. Mouldings according to claim 8, **characterized in that** these are lacquered with a clear lacquer.

10. Use of the mouldings according to claims 8 and 9 in motor vehicle exterior uses.

## Revendications

1. Composition contenant :
A) 4 à 80 parties en poids d'au moins un poly(téréphtalate d'alcoylène),
B) 10 à 90 parties en poids d'au moins un polycarbonate aromatique,
C) 1,5 à 30 parties en poids d'au moins un polymère greffé à base de polybutadiène comme composant caoutchouc,
D) 1,5 à 30 parties en poids d'au moins un polymère greffé à base d'acrylate comme composant caoutchouc,
E) 0,01 à 5 parties en poids d'agents stabilisant les U.V.,
F) 0,01 à 10 parties en poids de colorant,
G) 0 à 5 parties en poids d'agents stabilisant à l'hydrolyse,
H) 0 à 54 parties en poids d'au moins une charge minérale particulaire,
I) 0 à 10 parties en poids d'autres additifs.

2. Composition selon la revendication 1, dans laquelle C) se compose de polymères greffés constitués de :
C1) 5 à 95% en poids d'au moins un monomère vinylique sur
C2) 95 à 5% en poids d'une ou de plusieurs bases de greffage, avec température de transition vitreuse du composant caoutchouc < -10°C à base de polybutadiène.

3. Composition selon la revendication 2, dans laquelle C1) est un mélange de :
C1.1) 50 à 99 parties en poids de styrène, α-méthylstyrène, p-méthylstyrène, p-chlorostyrène et/ou ester alcoylique (C₁-C₈) d'acide acrylique et/ou ester alcoylique (C₁-C₈) d'acide méthacrylique, et
C1.2) 1 à 50 parties en poids de vinylcyanure et/ou ester alcoylique (C₁-C₈) d'acide (méth)acrylique et/ou d'anhydride et imide d'acide carboxylique insaturé.

4. Composition selon la revendication 1 ou 2, dans laquelle D) se compose des polymères greffés constitués de :
D1) 5 à 95% en poids d'au moins un monomère vinylique sur
D2) 95 à 5% en poids d'une ou de plusieurs bases de greffage, avec température de transition vitreuse du composant caoutchouc < 10°C à base de caoutchouc acrylate.

5. Composition selon l'une ou plusieurs des revendications précédentes, dans laquelle le poly(téréphtalate d'éthylène) est mis en oeuvre comme composant A.

6. Utilisation de la composition selon l'une ou plusieurs des revendications précédentes, pour la préparation de pièces moulées.

7. Procédé de préparation de pièces moulées, matières moulables ou semi-finis, **caractérisé en ce que** l'on met en oeuvre des compositions contenant :
A) 4 à 80 parties en poids d'au moins un poly(téréphtalate d'alcoylène),
B) 10 à 90 parties en poids d'au moins un polycarbonate aromatique,
C) 1,5 à 30 parties en poids d'au moins un polymère greffé à base de polybutadiène comme composant caoutchouc,
D) 1,5 à 30 parties en poids d'au moins un polymère greffé à base d'acrylate comme composant caoutchouc,
E) 0,01 à 5 parties en poids d'agents stabilisant les U.V.,
F) 0,01 à 10 parties en poids de colorant,
G) 0 à 5 parties en poids d'agents stabilisant à l'hydrolyse,
H) 0 à 54 parties en poids d'au moins une charge minérale particulaire,
I) 0 à 10 parties en poids d'autres additifs.

8. Matières moulables, semi-finis ou pièces moulées obtenus à partir de compositions contenant :
A) 4 à 80 parties en poids d'au moins un poly(téréphtalate d'alcoylène),
B) 10 à 90 parties en poids d'au moins un polycarbonate aromatique,
C) 1,5 à 30 parties en poids d'au moins un polymère greffé à base de polybutadiène comme composant caoutchouc,
D) 1,5 à 30 parties en poids d'au moins un polymère greffé à base d'acrylate comme composant caoutchouc,
E) 0,01 à 5 parties en poids d'agents stabilisant les U.V.,
F) 0,01 à 10 parties en poids de colorant,
G) 0 à 5 parties en poids d'agents stabilisant à l'hydrolyse,
H) 0 à 54 parties en poids d'au moins une charge minérale particulaire,
I) 0 à 10 parties en poids d'autres additifs.

9. Pièces moulées selon la revendication 8, **caractérisées en ce qu'**elles peuvent être peintes avec une laque transparente.

10. Utilisation des pièces moulées selon les revendications 8 et 9, dans des applications extérieures sur automobiles.
